# EUROPEAN PATENT APPLICATION

(11) **EP 4 585 469 A1**
(43) Date of publication of application: **16.07.2025**
(21) Application number: 25150966.7
(22) Date of filing: 09.01.2025
(51) Int. Cl.: B60R 9/06, B60R 9/08, B60R 9/10

(54) **CARRIER DEVICE AND VEHICLE-HOLDING VEHICLE**

(30) Priority: 11.01.2024 US 202463619878 P
(71) Applicant: King Rack Industrial Co., Ltd., Taichung City (TW)
(72) Inventor: WANG, CHIU-KUEI, 437 Taichung City (TW); ESPESSET, HUGUES, 81160 ST Juery (FR); FRÉDÉRIC, GIROD, 81160 ST Juery (FR)
(74) Representative: Müller Hoffmann & Partner

(57) **Abstract**

A carrier device (10, 40) mountable to a first vehicle (20) for holding a second vehicle (30), different from the first vehicle, is provided. The carrier device includes a supporting member (12, 42) having reception elements (122, 422) for supporting the second vehicle and an arm member (11, 41) coupled to the supporting member and located between the reception elements. The arm member further includes a carrier element (113, 413) configured to hold the second vehicle, a first rotation element (112, 412) coupled to the carrier element to rotate the carrier element along a first rotation axis, a first locking element (115, 4151) configured to control whether the first rotation element is allowed to rotate the carrier element along the first rotation axis, and a column element (111, 411) coupled to the first rotation element and a pivot control element (123, 423), perpendicular to the first rotation axis of the supporting member to be pivotably rotatable about the pivot control element, allowing the arm member to rotate.

## Description

### CROSS-REFERENCE TO RELATED APPLICATION(S)

The present disclosure claims the benefit of and priority to U.S. Provisional Patent Application Serial No. 63/619,878, filed on January 11, 2024, entitled "Universal Bicycle Carrier," the content of which is hereby incorporated herein fully by reference in its entirety for all purposes.

### FIELD

The present disclosure generally relates to a carrier device, and more specifically, to a vehicle-holding carrier device.

### BACKGROUND

The development of carrier device, such as a bike carrier, for carrying a load and adapted to be mounted to a vehicle is progressing rapidly. Typically, a rear-mounted load carrier may be configured as the bike carrier for carrying one or more bicycles. However, the new category of e-bikes, became more popular in the last few years, made the need for new types of bike carriers. These new e-bikes are heavier and more challenging to load onto a bike carrier. In addition, these new e-bikes are also wider due to the integration of the battery in the bike frame.

The need to have a technical solution that may help load the user's bike became more important. A ramp device may be a solution to load the bike with the use of straight wheel supports for the bike wheels. However, it may still be difficult to use the ramp device since a vertical arm of the bike carrier may be an obstacle to the movement of the bike. Thus, different types of bike carriers may be necessary for the user to simply and effortlessly load the bikes onto a vehicle.

Furthermore, when the vehicle makes an emergency brake or accelerates rapidly, objects on the vehicle often tend to tilt forward or shift backward due to inertia. Thus, when the bike is loaded onto the vehicle, such as above the vehicle or at the back of the vehicle, the bike also tends to tilt forward or shift backward due to inertia. In addition, due to the significantly greater weight of the e-bike compared to a traditional bicycle, the extent of the e-bike's forward tilt or backward shift due to inertia will be greater than that of the traditional bicycle. Thus, different types of bike carriers may be necessary for stably loading the bikes onto the vehicle.

### SUMMARY

The present disclosure is directed to a carrier device adapted to be mounted to a first vehicle for holding a second vehicle, different from the first vehicle, and a vehicle-holding vehicle.

In a first aspect of the present disclosure, a carrier device mountable to a first vehicle for holding a second vehicle, different from the first vehicle, is provided. The carrier device includes: a supporting member having multiple reception elements for supporting the second vehicle; and an arm member coupled to the supporting member and located between the multiple reception elements, the arm member further including: a carrier element configured to hold the second vehicle; a first rotation element coupled to the carrier element and configured to rotate the carrier element along a first rotation axis; a first locking element configured to control whether the first rotation element is allowed to rotate the carrier element along the first rotation axis or not; and a column element coupled to the first rotation element and a pivot control element of the supporting member, the pivot control element being perpendicular to the first rotation axis, wherein the column element is pivotably rotatable about the pivot control element of the supporting member, allowing the arm member to rotate between a loading position and an unloading position.

In an implementation of the first aspect of the present disclosure, the arm member is rotated to the loading position for holding the second vehicle on the supporting member, and the carrier element is rotated along the first rotation axis by the first rotation element to a release position for preventing the second vehicle from contacting the arm member that is located at the loading position, when the second vehicle is being loaded along the multiple reception elements onto the supporting member.

In another implementation of the first aspect of the present disclosure, the arm member further includes: a pivot rotation element coupled to the pivot control element of the supporting member to rotate the arm member between the loading position and the unloading position, wherein: a rotation of the pivot rotation element is restricted by the pivot control element of the supporting member when the second vehicle is hold on the carrier device, and the rotation of the pivot rotation element is restricted to prevent the second vehicle from shifting along a vehicle orientation when the first vehicle is moving along the vehicle orientation.

In another implementation of the first aspect of the present disclosure, the arm member further includes: a height adjustment element configured to adjust an element height of the carrier element to correspond to a vehicle height of the second vehicle.

In another implementation of the first aspect of the present disclosure, the arm member further includes: a second locking element configured to control whether the height adjustment element is allowed to adjust the element height of the carrier element or not, wherein the second locking element is integrally formed with or separately formed from the first locking element.

In another implementation of the first aspect of the present disclosure, the carrier element further includes: a base portion; and a holder portion coupled to the base portion, wherein the holder portion is movable to tighten or loosen a tubular portion of the second vehicle.

In another implementation of the first aspect of the present disclosure, the arm member further includes: a second rotation element coupled to the carrier element and the first rotation element, wherein the second rotation element is rotatable to rotate the base portion along a second rotation axis, perpendicular to the first rotation axis, for adjusting an orientation of the carrier element to correspond to a tubular direction of the tubular portion.

In another implementation of the first aspect of the present disclosure, the arm member further includes: a third locking element configured to control whether the second rotation element is allowed to adjust the orientation of the carrier element or not, wherein the third locking element is integrally formed with or separately formed from the first locking element.

In another implementation of the first aspect of the present disclosure, the first rotation element is rotatable for allowing the carrier element to rotate along the first rotation axis to be perpendicular to the pivot control element when the first locking element is in an unlocked state, and the carrier element is rotated along the first rotation axis to be perpendicular to the pivot control element for preventing the second vehicle from contacting the arm member, when the second vehicle is being loaded onto the supporting member.

In another implementation of the first aspect of the present disclosure, a rotation of the first rotation element is restricted by the first locking element when the first locking element is in a locked state, and the rotation of the first rotation element is restricted to prevent the second vehicle from shifting along a vehicle orientation when the first vehicle is moving along the vehicle orientation.

In another implementation of the first aspect of the present disclosure, the supporting member further includes: an accommodating element coupled to one of the reception elements, wherein the accommodating element accommodates the arm member when the arm member is located in the unloading position.

In another implementation of the first aspect of the present disclosure, the supporting member further includes a turning element coupled to one of the reception elements, wherein the carrier device is movable through the turning element when the turning element is placed on a surface.

In a second aspect of the present disclosure, a vehicle-holding vehicle is provided. The vehicle-holding vehicle includes: a first vehicle; and a carrier device coupled to the first vehicle for holding a second vehicle, different from the first vehicle, the carrier device including: a supporting member having multiple reception elements for supporting the second vehicle; and an arm member coupled to the supporting member and located between the multiple reception elements, the arm member further including: a carrier element configured to hold the second vehicle; a first rotation element coupled to the carrier element and configured to rotate the carrier element along a first rotation axis, perpendicular to a vehicle orientation of the first vehicle; a first locking element configured to control whether the first rotation element is allowed to rotate the carrier element along the first rotation axis or not; and a column element coupled to the first rotation element and a pivot control element of the supporting member, wherein the column element is pivotably rotatable about the pivot control element of the supporting member, allowing the arm member to rotate between a loading position and an unloading position.

In another implementation of the second aspect of the present disclosure, the arm member is rotated to the loading position for holding the second vehicle on the supporting member, and the carrier element is rotated along the first rotation axis by the first rotation element to a release position for preventing the second vehicle from contacting the arm member that is located at the loading position, when the second vehicle is being loaded along the multiple reception elements onto the supporting member.

In another implementation of the second aspect of the present disclosure, the arm member further includes: a pivot rotation element coupled to the pivot control element of the supporting member to rotate the arm member between the loading position and the unloading position, wherein: a rotation of the pivot rotation element is restricted by the pivot control element of the supporting member when the second vehicle is hold on the carrier device, and the rotation of the pivot rotation element is restricted to prevent the second vehicle from shifting along the vehicle orientation when the first vehicle is moving along the vehicle orientation.

In another implementation of the second aspect of the present disclosure, the arm member further include: a height adjustment element configured to adjust an element height of the carrier element to correspond to a vehicle height of the second vehicle; and a second locking element configured to control whether the height adjustment element is allowed to adjust the element height of the carrier element or not, wherein the second locking element is integrally formed with or separately formed from the first locking element.

In another implementation of the second aspect of the present disclosure, the carrier element further includes: a base portion; and a holder portion coupled to the base portion, wherein the holder portion is movable to tighten or loosen a tubular portion of the second vehicle.

In another implementation of the second aspect of the present disclosure, the arm member further includes: a second rotation element coupled to the carrier element and the first rotation element, wherein the second rotation element is rotatable to rotate the base portion along a second rotation axis, perpendicular to the first rotation axis, for adjusting an orientation of the carrier element to correspond to a tubular direction of the tubular portion; and a third locking element configured to control whether the second rotation element is allowed to adjust the orientation of the carrier element or not, wherein the third locking element is integrally formed with or separately formed from the first locking element.

In another implementation of the second aspect of the present disclosure, the first rotation element is rotatable for allowing the carrier element to rotate along the first rotation axis to be perpendicular to the pivot control element when the first locking element is in an unlocked state, and the carrier element is rotated along the first rotation axis to be perpendicular to the pivot control element for preventing the second vehicle from contacting the arm member, when the second vehicle is being loaded onto the supporting member.

In another implementation of the second aspect of the present disclosure, a rotation of the first rotation element is restricted by the first locking element when the first locking element is in a locked state, and the rotation of the first rotation element is restricted to prevent the second vehicle from shifting along the vehicle orientation when the first vehicle is moving along the vehicle orientation.

An implementation of the second aspect of the present disclosure further includes all of the above implementations of the first aspect of the present disclosure.

### BRIEF DESCRIPTION OF THE DRAWINGS

Aspects of the present disclosure are best understood from the following detailed disclosure and the corresponding figures. Various features are not drawn to scale and dimensions of various features may be arbitrarily increased or reduced for clarity of discussion.
FIG. 1 is a schematic diagram illustrating a vehicle-holding vehicle including a carrier device and a first vehicle, in accordance with one or more example implementations of this disclosure.
FIG. 2A is a perspective view of the carrier device, illustrated in FIG. 1, in accordance with one or more example implementations of this disclosure.
FIG. 2B is a schematic diagram illustrating the carrier device coupled to a ramp member for loading a second vehicle, in accordance with one or more example implementations of this disclosure.
FIG. 3 is a perspective view of the arm member, illustrated in FIG. 2A, in accordance with one or more example implementations of this disclosure.
FIG. 4 is an exploded view of the arm member, illustrated in FIG. 3, in accordance with one or more example implementations of this disclosure.
FIG. 5 is a partially enlarged view of a region A, illustrated in FIG. 3, in accordance with one or more example implementations of this disclosure.
FIG. 6 is a perspective view of the height adjustment element, illustrated in FIG. 4, in accordance with one or more example implementations of this disclosure.
FIG. 7 is an exploded view of the first rotation element and the carrier element, illustrated in FIG. 3, and a second rotation element, in accordance with one or more example implementations of this disclosure.
FIG. 8 is a perspective view of another carrier device, illustrated in FIG. 1, in accordance with one or more example implementations of this disclosure.
FIG. 9 is a perspective view of an arm member, illustrated in FIG. 8, in accordance with one or more example implementations of this disclosure.
FIG. 10 is an exploded view of the arm member, illustrated in FIG. 9, in accordance with one or more example implementations of this disclosure.
FIG. 11 is a partially enlarged view of a region B, illustrated in FIG. 9, in accordance with one or more example implementations of this disclosure.
FIG. 12 is another perspective view of the arm member, illustrated in FIG. 8, in accordance with one or more example implementations of this disclosure.

### DETAILED DESCRIPTION

The following disclosure contains specific information pertaining to exemplary implementations in the present disclosure. The drawings in the present disclosure and their accompanying detailed disclosure are directed to merely exemplary implementations. However, the present disclosure is not limited to merely these exemplary implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For the purposes of consistency and ease of understanding, like features are identified (although, in some examples, not shown) by numerals in the exemplary figures. However, the features in different implementations may be different in other respects, and thus shall not be narrowly confined to what is shown in the figures.

The disclosure uses the phrases "in one implementation," "in some implementations," and so on, which may each refer to one or more of the same or different implementations. The term "coupled" is defined as connected, directly, or indirectly through intervening components, and is not necessarily limited to physical connections. The term "comprising" means "including, but not necessarily limited to;" it specifically indicates openended inclusion or membership in the so-described combination, group, series, and the equivalent.

Additionally, for the purposes of explanation and non-limitation, specific details, such as functional entities, techniques, protocols, standards, and the like, are set forth for providing an understanding of the described technology. In other examples, detailed disclosure of well-known methods, technologies, systems, architectures, and the like are omitted so as not to obscure the disclosure with unnecessary details.

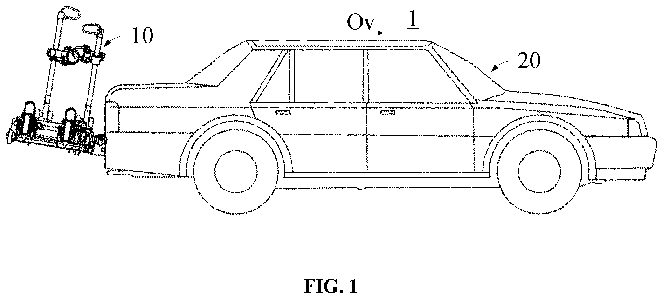

FIG. 1 is a schematic diagram illustrating a vehicle-holding vehicle 1 including a carrier device 10 and a first vehicle 20, in accordance with one or more example implementations of this disclosure. The carrier device 10 may be coupled to the first vehicle 20 for holding a second vehicle, different from the first vehicle 20. In some implementations, the carrier device 10 may be adapted to be mounted to the first vehicle 20 for holding the second vehicle. In other words, the carrier device 10 may be removably mounted to the first vehicle 20. In some other implementations, the carrier device 10 may be fixedly mounted on the first vehicle 20.

In some implementations, the first vehicle 20 may be a car, a truck, a bus, an off-road vehicle (ORV), etc. In addition, the first vehicle 20 may be a petrol-driven vehicle, a hybrid vehicle, a plug-in electric vehicle, a hydrogen vehicle, etc. In some implementations, the second vehicle may be smaller than the first vehicle 20. Since the carrier device 10 may be mounted to a rear side of the first vehicle 20, the second vehicle may be held by the carrier device 10 at the rear side of the first vehicle 20. The rear side of the first vehicle 20 may be determined based on a vehicle orientation Ov of the first vehicle 20, directed from the front side to the rear side. In some implementations, the second vehicle may be a bicycle, such as a utility bicycle, a mountain bicycle, a racing bicycle, a folding bicycle, an electric bicycle, or a hybrid bicycle.

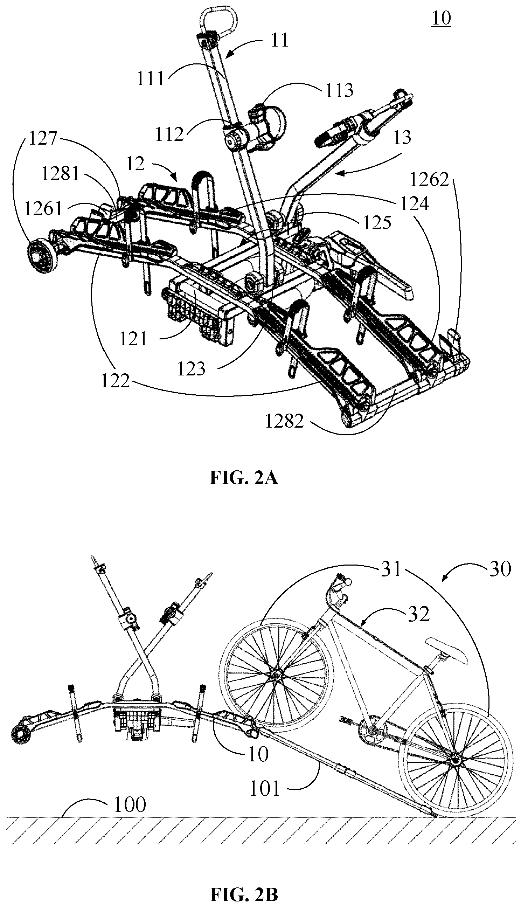

FIG. 2A is a perspective view of the carrier device 10, illustrated in FIG. 1, in accordance with one or more example implementations of this disclosure. The carrier device 10 may include an arm member 11 and a supporting member 12. The supporting member 12 may further include a flat element 121, multiple reception elements 122 for supporting the second vehicle, and a pivot control element 123 coupled to the arm member 11. The arm member 11 may be coupled to the supporting member 12 and located between the reception elements 122. The reception elements 122 may be inclinedly coupled to the flat element 121. Multiple inclined angles of the reception elements 122 with respect to the flat element 121 may be equal to or different from each other. An included angle between extended lines of the reception elements 122 may be an obtuse angle. The pivot control element 123 may be parallel to the flat element 121. In addition, with reference to FIGS. 1 and 2A, the pivot control element 123 may be parallel to the vehicle orientation Ov of the first vehicle 20.

The arm member 11 may further include a column element 111, a first rotation element 112, and a carrier element 113. The carrier element 113 may be used to hold the second vehicle. The first rotation element 112, coupled to the carrier element 113, may be used to rotate the carrier element 113 along a first rotation axis. In addition, the column element 111, coupled to the first rotation element 112 and the pivot control element 123, may support the first rotation element 112 and the carrier element 113. In some implementations, a portion of the column element 111, the portion coupled to the first rotation element 112, may be the first rotation axis of the first rotation element 112. In addition, the first rotation axis may be perpendicular to the pivot control element 123. Since the pivot control element 123 may be parallel to the vehicle orientation Ov of the first vehicle 20, the first rotation axis, perpendicular to the pivot control element 123, may also be perpendicular to the vehicle orientation Ov of the first vehicle 20.

The column element 111 may be pivotably rotatable about the pivot control element 123 of the supporting member 12, allowing the arm member 11 to rotate between a loading position and an unloading position. The unloading position may be a position where the arm member 11 is substantially or almost parallel to one of the reception elements 122. The arm member 11 may be rotated to the loading position for holding the second vehicle on the supporting member 12. In some implementations, the loading position may be a position where the arm member 11 is substantially or almost perpendicular to one of the row element 121 and the reception elements 122. In some other implementations, the loading position may be a position where the arm member 11 may stably hold the second vehicle on the supporting member 12. However, the arm member 11 may be an obstacle to moving the second vehicle, when the second vehicle is being loaded to the carrier device 10.

FIG. 2B is a schematic diagram illustrating the carrier device 10 coupled to a ramp member 101 for loading a second vehicle 30, in accordance with one or more example implementations of this disclosure. One terminal of the ramp member 101 may be removably mounted to one of the reception elements 122, and the other terminal of the ramp member 101 may be placed on a surface 100. In other words, with reference to FIG. 2A and 2B, one of the reception elements 122 may be adapted to be coupled to the ramp member 101 for loading the second vehicle 30 along the ramp member 101 from the surface 100 onto the supporting member 12. When the second vehicle 30 is being loaded to the carrier device 10, the ramp member 101 may be mounted to one of the reception elements 122. Thus, the second vehicle 30 may climb the ramp member 101 for loading onto the carrier device 10. Then, the ramp member 101 may be disassembled from the carrier device 10 when the second vehicle 30 is loaded onto the carrier device 10. In some implementations, the surface 100 may be a ground.

The carrier element 113 may be rotated along the first rotation axis by the first rotation element 112 to a release position for preventing the second vehicle 30 from contacting the arm member 11 that is located at the loading position, when the second vehicle 30 is being loaded along the reception elements 122 onto the supporting member 12. Before the second vehicle 30 is loaded, the carrier element 113 may be rotated along the first rotation axis to the release position in advance. Thus, the carrier element 113 may not traverse a loading path of the second vehicle 30, preventing it from being the obstacle during the loading of the second vehicle 30. In some implementations, the release position may be a position where the carrier element 113 is substantially or almost parallel to the reception elements 122. After the second vehicle 30 is moved on the reception elements 122 along the ramp member 101, the carrier element 113 may be rotated along the first rotation axis back to an operation position for holding the second vehicle 30. In some implementations, the operation position may be a position where the carrier element 113 is allowed to hold the second vehicle 30.

Referring back to FIG. 2A, the supporting member 12 may further include multiple receiving elements 124 for supporting a third vehicle, and a shaft control element 125. In addition, the carrier device 10 may further include a branch member 13 coupled to the supporting member 12 between the receiving elements 124. The branch member 13 may be pivotably rotatable about the shaft control element 125 of the supporting member 12, allowing the branch member 13 to rotate between a loading position and an unloading position.

The receiving elements 124 may be different from, similar to, or identical to the reception elements 122. The branch member 13 may be different from, similar to, or identical to the arm member 11. Thus, the determination scheme of the loading position and the unloading position of the branch member 13 may be identical or similar to that of the arm member 11. In addition, the shaft control element 125 may be different from, similar to, or identical to the pivot control element 123. The third vehicle may be different from, similar to, or identical to the second vehicle 20.

The reception elements 122 and the arm member 11 may be set as a first vehicle holder, and the receiving elements 124 and the branch member 13 may be set as a second vehicle holder. The number of the vehicle holders may be greater than or equal to one. For example, the number of the vehicle holders may be equal to three or four.

In some implementations, the supporting member 12 may further include a first accommodating element 1261. The first accommodating element 1261 may be directly or indirectly coupled to one of the reception elements 122. The first accommodating element 1261 may accommodate the arm member 11 to prevent the arm member 11 from rotating between the loading position and the unloading position when the arm member 11 is not hold the second vehicle 30. In other words, when the arm member 11 is accommodated by the first accommodating element 1261, the arm member 11 may be regarded as being in the unloaded position. The first accommodating element 1261 may be a clamp element to hold the arm member 11. In addition, the first accommodating element 1261 may align with the pivot control element 123 in a direction corresponding to the length of the arm member 11.

In some other implementations, the supporting member 12 may further include a second accommodating element 1262. The second accommodating element 1262 may be directly or indirectly coupled to one of the receiving elements 124. The second accommodating element 1262 may accommodate the branch member 13 to prevent the branch member 13 from rotating between the loading position and the unloading position when the branch member 13 is not hold the third vehicle. In other words, when the branch member 13 is accommodated by the second accommodating element 1262, the branch member 13 may be regarded as being in the unloaded position. The second accommodating element 1262 may be another clamp element to hold the branch member 13. In addition, the second accommodating element 1262 may align with the shaft control element 125 in a direction corresponding to the length of the branch member 13.

The supporting member 12 may further include multiple turning elements 127. In some implementations, a first one of the turning elements 127 may be directly or indirectly coupled to a specific one of the reception elements 122, and a second one of the turning elements 127 may be directly or indirectly coupled to a specific one of the receiving elements 124. The specific reception element and the specific receiving element may be located at the same side of the carrier device 10. For example, the first one and the second one of the turning elements 127 may be located at a left side of the carrier device 10. In addition, the first turning element may be far from the first vehicle 20 and the second turning element may neighbor the first vehicle 20 when the carrier device 10 is mounted on the first vehicle. In other words, the first turning element may be installed on a left-rear side of the carrier device 10, and the second turning element may be installed on a left-front side of the carrier device 10. Each of the turning elements 127 may be used to make the carrier device 10 be movable when a corresponding one of the turning elements is placed on the surface 100. Thus, the carrier device 10 may be movable through the first turning element when the first turning element is placed on the surface 100.

In some other implementations, a third one of the turning elements 127 may be directly or indirectly coupled between the specific reception element and the specific receiving element. In yet some other implementations, the supporting member 12 may further include multiple rolling elements (not shown). The installation of the rolling elements may be identical to or different from the that of the turning elements 127. When the rolling elements and the turning elements 127 are installed on the carrier device 10, the carrier device 10 may be tilted to the left or the right to be moveable through the turning elements 127 or the rolling elements.

The supporting member 12 may further include a first connection element 1281 and a second connection element 1282. The first connection element 1281 may be located at the left side of the carrier device 10, and the second connection element 1282 may be located at a right side of the carrier device 10. A first one of the reception elements 122 may be coupled to a first one of the receiving elements 124 by the first connection element 1281, and a second one of the reception elements 122 may be coupled to a second one of the receiving elements 124 by the second connection element 1282. In some implementations, the first accommodating element 1261 may be installed on the first connection element 1281 to indirectly couple to the first one of the reception elements 122. In addition, the second accommodating element 1262 may be installed on the second connection element 1282 to indirectly couple to a second one of the receiving elements 124. Thus, the first accommodating element 1261 and the second accommodating element 1261 may be installed on different connection elements.

In some other implementations, the turning elements 127 may be installed on two sides of the first connection element 1281. Thus, the first turning element may be indirectly coupled to the first one of the reception elements 122 by the first connection element 1281, and the second turning element may be indirectly coupled to the first one of the receiving elements 124 by the first connection element 1281. In yet some other implementations, both the first accommodating element 1261 and the turning element 127 may be installed on the first connection element 1281.

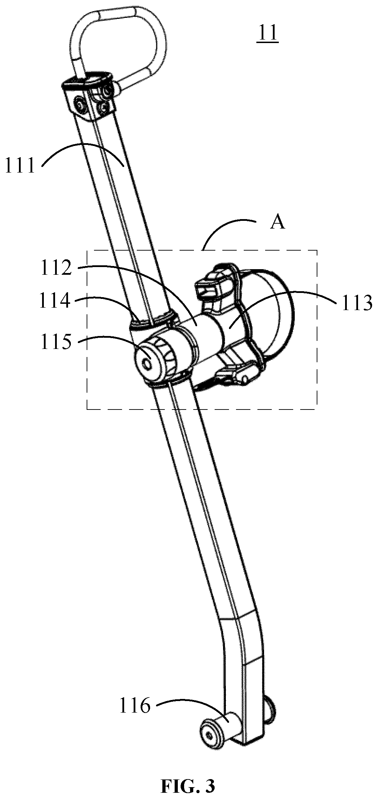

In order to clearly illustrate the implementations of this disclosure in detail, the arm member 11 may be illustrated as examples. FIG. 3 is a perspective view of the arm member 11, illustrated in FIG. 2A, in accordance with one or more example implementations of this disclosure. Besides the column element 111, the first rotation element 112, and the carrier element 113, the arm member 11 may further include a height adjustment element 114, a locking element 115, and a pivot rotation element 116.

The height adjustment element 114 may be surrounded by the first rotation element 112. The height adjustment element 114 may be used to adjust an element height of the carrier element 113 to correspond to a vehicle height of the second vehicle 30. When the vehicle height of the second vehicle is high, the location of the center of gravity of the second vehicle 30 may also be high. Thus, the element height of the carrier element 113 may need to be high enough to ensure that the carrier element 113 stably holds the second vehicle 30. The higher the element height of the carrier element 113, the longer an element distance between the carrier element 113 and the flat element 121. The element distance may need to be greater than a distance threshold for stably holding the second vehicle 30. The distance threshold may be determined based on the vehicle height of the second vehicle 30. In some implementations, the vehicle height of the second vehicle 30 may be determined based on a highest point of a top tube, a lowest point of the top tube, or a highest point of a seat tube of a vehicle frame 32 of the second vehicle 30.

The locking element 115 may be coupled to the first rotation element 112. The first rotation element 112 may be sandwiched between the locking element 115 and the carrier element 113. In some implementations, when the locking element 115 is locked, the movement of the height adjustment element 114 and the rotation of the first rotation element 112 and the carrier element 113 may be restricted. In addition, when the locking element 115 is unlocked, the height adjustment element 114 may be allowed to move and the first rotation element 112 and the carrier element 113 may be allowed to rotate. In some other implementations, the arm member 11 may include multiple locking elements. When one of the locking elements is locked, the movement of the height adjustment element 114 may be restricted. When another one of the locking elements is locked, the rotation of the first rotation element 112 may be restricted. When the other locking element is locked, the rotation of the carrier element 113 may be restricted.

With reference to FIGS. 2A, 2B, and 3, the pivot rotation element 116 may be coupled to the pivot control element 123 of the supporting member 12 to rotate the arm member 11 between the loading position and the unloading position. In some implementations, the pivot control element 123 of the supporting member 12 may allow the pivot rotation element 116 to be rotatable, enabling the arm member 11 to rotate to the loading position along the pivot control element 123 before the second vehicle 30 is loaded onto the carrier device 10. In some implementations, the rotation of the pivot rotation element 116 may be restricted by the pivot control element 123 of the supporting member 12 when the second vehicle 30 is hold on the carrier device 10. The rotation of the pivot rotation element 116 may be restricted to prevent the second vehicle 30 from shifting along the vehicle orientation Ov of the first vehicle 20 when the first vehicle 20 is moving along the vehicle orientation Ov of the first vehicle 20.

In some implementations, one of the pivot rotation element 116 and the pivot control element 123 may further include a rotation fixing portion (not shown). The other one of the pivot rotation element 116 and the pivot control element 123 may further include a rotation engagement portion (not shown). The structure of the rotation fixing portion and the rotation engagement portion may allow the arm member 11 to switch between allowing or disallowing the rotation. For example, the structure of the rotation fixing portion and the rotation engagement portion may be a tight screw packing structure to allow the arm member 11 to switch between allowing or disallowing the rotation.

In some other implementations, the carrier device 10 may further include a first external fixing element (not shown) removably installed between the pivot rotation element 116 and the pivot control element 123 to allow the arm member 11 to switch between allowing or disallowing the rotation. For example, before the second vehicle 30 is loaded onto the carrier device 10, the first external fixing element may be removed from the carrier device 10 to enable the arm member 11 to rotate to the loading position along the pivot control element 123. In addition, when the second vehicle 30 is hold on the carrier device 10, the first external fixing element may be installed on the carrier device 10 for restricting the rotation of the pivot rotation element 116 to prevent the second vehicle 30 from shifting due to inertia.

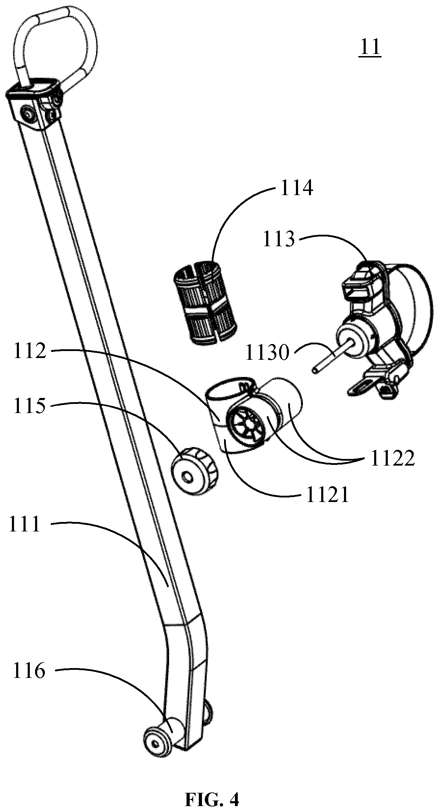

FIG. 4 is an exploded view of the arm member 11, illustrated in FIG. 3, in accordance with one or more example implementations of this disclosure. With reference to FIGS. 3-4, the column element 111 may be surrounded by the height adjustment element 114, and the height adjustment element 114 may be further surrounded by the first rotation element 112. In other words, the column element 111 may also be surrounded by the first rotation element 112.

The first rotation element 112 may further include a ring portion 1121 and a clamp portion 1122. The column element 111 and the height adjustment element 114 may be surrounded by the ring portion 1121 of the first rotation element 112. The clamp portion 1122 of the first rotation element 112 may be sandwiched between the carrier element 113 and the locking element 115.

The carrier element 113 may further include a connection portion 1130. The connection portion 1130 may traverse the clamp portion 1122 of the first rotation element 112 to couple to the locking element 115. When the locking element 115 is locked, the locking element 115 may be moved slightly closer to the carrier element 113 along the connection portion 1130. When the locking element 115 is unlocked, the locking element 115 may be moved slightly farther away from the carrier element 113 along the connection portion 1130. In some implementations, the connection portion 1130 may be a screw.

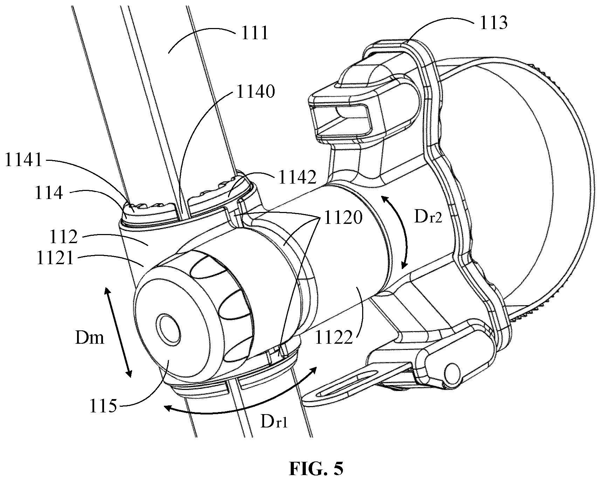

FIG. 5 is a partially enlarged view of a region A, illustrated in FIG. 3, in accordance with one or more example implementations of this disclosure. The height adjustment element 114 may further include multiple leaf portions, such the leaf portions 1141 and 1142. The number of the leaf portions may be determined based on an external shape of a cross-section of the column element 111. When the external shape of the cross-section of the column element 111 is a circle, the number of the leaf portions may be greater than or equal to two, such as 2, 3, and 4. When the external shape of the cross-section of the column element 111 is a triangle, the number of the leaf portions may be greater than or equal to 3, such as 3, 4, 5, and 6. When the external shape of the cross-section of the column element 111 is a quadrangle, such as a square and a rectangle, the number of the leaf portions may be greater than or equal to 4, such as 4, 5, 6, 7. and 8.

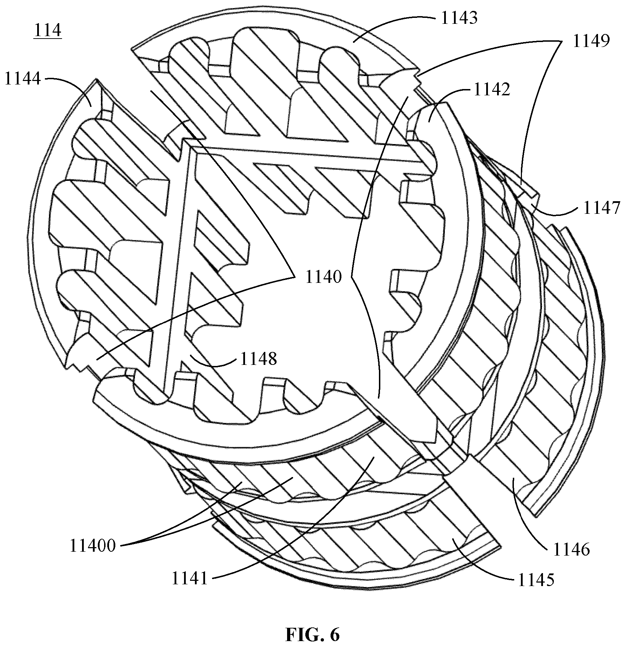

Each of the leaf portions may further include multiple movement fixing units. FIG. 6 is a perspective view of the height adjustment element 114, illustrated in FIG. 4, in accordance with one or more example implementations of this disclosure. The height adjustment element 114 may include the leaf portions, such as the leaf portions 1141-1148. In order to clearly illustrate the leaf portions 1141-1148, in accordance with one or more example implementations of this disclosure, the leaf portion 1141 may be illustrated as examples.

With reference to FIGS. 5-6, since the first rotation element 112 is rotatable with respect to the height adjustment element 114, an external shape of a cross-section of the height adjustment element 114 may be substantially similar to or identical to a circle. In addition, since the height adjustment element 114 is movable along the column element 111 in a moving direction Dm, an internal shape of a cross-section of the height adjustment element 114 may correspond to the external shape of the cross-section of the column element 111. In other words, the external shape of the cross-section of the column element 111 may be substantially similar to or identical to the internal shape of the cross-section of the height adjustment element 114. For example, when the external shape of the cross-section of the column element 111 is a circle, the internal shape of the cross-section of the height adjustment element 114 may also be a circle. When the external shape of the cross-section of the column element 111 is a square, the internal shape of the cross-section of the height adjustment element 114 may also be a square.

With reference to FIGS. 5-6, the external shape of the cross-section of the column element 111 and the internal shape of the cross-section of the height adjustment element 114 may be squares. Thus, the internal shape of the cross-section of the height adjustment element 114 may be different from the external shape of the cross-section of the height adjustment element 114. As such, the movement fixing units 11411-11414 may have different lengths. In other words, the lengths of the movement fixing units may be associated with the external shape of the cross-section of the column element 111 and the external shape of the cross-section of the height adjustment element 114. In addition, the lengths of the movement fixing units may also be associated with the internal shape and the external shape of the cross-section of the height adjustment element 114.

In some implementations, the lengths of the movement fixing units in a specific one of the leaf portions may also be associated with multiple distances between the movement fixing units and a center line of the specific leaf portion. When a first distance between a first one of the movement fixing units and the center line in the specific leaf portion is longer than a second distance between a second one of the movement fixing units and the center line in the specific leaf portion, the length of the first movement fixing unit may be shorter than the length of the second movement fixing unit. For example, the length of a first movement fixing unit 11411 far from the center line of the leaf portion 1141 may be shorter than the length of a second movement fixing unit 11412 adjacent to the center line of the leaf portion 1141.

Referring back to FIG. 5, the first rotation element 112 may further have a slit portion 1120 dividing the ring portion 1121 to generate a notch and dividing the clamp portion 1122 into two clamp sub-portions. With reference FIGS. 4-6, when the locking element 115 is locked to move the locking element 115 slightly closer to the carrier element 113 along the connection portion 1130, the two clamp sub-portions of the clamp portion 1122 may also move slightly closer to each other. In other words, the slit portion 1120 may be narrowed and the height adjustment element 114, the ring portion 1121, and the clamp portion 1122 may be tied by the locking element 115 and the carrier element 113. Since the height adjustment element 114 is tied by the ring portion 1121, multiple gap portions 1140 between the leaf portions 1141-1144 may also be narrowed to make the leaf portions 1141-1144 fasten the column element 111. Thus, when the locking element 115 in a locked state, the height adjustment element 114 may fasten the column element 111 to prevent a relative movement between the column element 111 and the height adjustment element 114.

When the locking element 115 is unlocked to move the locking element 115 farther from the carrier element 113 along the connection portion 1130, the two clamp sub-portions of the clamp portion 1122 may move farther from each other. In other words, the slit portion 1120 may be enlarged, and the height adjustment element 114, the ring portion 1121, and the clamp portion 1122 may be loosened. Since the height adjustment element 114 is loosened, the gap portions 1140 between the leaf portions 1141-1144 may also be enlarged and the height adjustment element 114 may become movable along the column element 111 in the moving direction Dm. In addition, the height adjustment element 114 may further include a pair of step portions 1149, illustrated in FIG. 6. With reference to FIGS. 5-6, the ring portion 1121 of the first rotation element 112 may be enclosed within the pair of step portions 1149. In some implementations, the ring portion 1121 of the first rotation element 112 may be fully fitted within the pair of step portions 1149. Thus, when the height adjustment element 114 is moved along the column element 111 in an unlocked state, the first rotation element 112 may also be moved with the carrier element 113 by the pair of step portions 1149 of the height adjustment element 114. Therefore, the locking element 115 may be determined as a second locking element used to control whether the height adjustment element 114 is allowed to move the first rotation element 112 and the carrier element 113 to adjust the element height of the carrier element 113 or not. It should be noted that the locked scheme between the locking element 115 and the height adjustment element 114 may be changed without departing from the scope of the present disclosure.

Furthermore, when the locking element 115 is unlocked, the slit portion 1120 may be enlarged and the ring portion 1121 may be loosened. Since the ring portion 1121 of the first rotation element 112 is enclosed within the pair of step portions 1149 of the height adjustment element 114, the ring portion 1121 of the first rotation element 112 may be allowed to rotate within the pair of step portions 1149 along a first rotation axis in a first rotation direction *D*_{*r*1}*.* Thus, the first rotation element 112 and the carrier element 113 coupled to the first rotation element 112 may also be allowed to rotate when the locking element 115 is in the unlocked state. In addition, when the locking element 115 is locked, the slit portion 1120 may be narrowed and the ring portion 1121 may be tied by the clamp portion 1122. Thus, the rotation of the first rotation element 112 and the carrier element 113 along the first rotation axis in the first rotation direction *D*_{*r*1} may be restricted. Therefore, the locking element 115 may be determined as a first locking element used to control whether the first rotation element 112 is allowed to rotate the carrier element 113 along the first rotation axis in the first rotation direction *D*_{*r*1} or not. In other words, the first rotation element may be rotatable for allowing the carrier element to rotate along the first rotation axis to be perpendicular to the pivot control element when the first locking element is in the unlocked state. In addition, the rotation of the first rotation element may be restricted by the first locking element when the first locking element is in the locked state. Since the locking element 115 is capable of simultaneously performing the functions of the first locking element and the second locking element, the locking element 115 may simultaneously be regarded as both the first locking element and the second locking element. In other words, as shown in FIG. 5, the second locking element may be identical to the first locking element. In some implementations, the first locking element may be integrally formed with or separately formed from the second locking element. In some implementations, the column element 111 may be the first rotation axis of the first rotation element 112. It should be noted that the locked scheme between the locking element 115 and the first rotation element 112 may be changed without departing from the scope of the present disclosure.

With reference to FIGS. 2A and 5, when the locking element 115 is in the unlocked state, the first rotation element 112 may be rotatable along the first rotation axis in the first rotation direction *D*_{*r*1} for allowing the carrier element 113 to rotate along the first rotation axis to be perpendicular to the pivot control element 123. In other words, the first rotation element 112 may rotate the carrier element 113 to be parallel to the reception elements 122. When the carrier element 113 is parallel to the reception elements 122 and perpendicular to the pivot control element 123, the carrier element 113 may not be an obstacle during loading the second vehicle to the carrier device 10. Thus, before the second vehicle is loaded onto the supporting member 12, the carrier element 113 may be rotated along the first rotation axis to be perpendicular to the pivot control element 123 for preventing the second vehicle from contacting the carrier element 113 of the arm member 11 during the following loading. Then, the locking element 115 may be locked again, and thus, the first rotation element 112 may fix the carrier element 113 to be perpendicular to the pivot control element 123.

The carrier element 113 may be allowed to rotate 360 degrees by the first rotation element 112 along the first rotation axis in the first rotation direction *D*_{*r*1}*.* Thus, when the second vehicle has been loaded onto the supporting member 12, the carrier element 113 may be rotated, along the first rotation axis by the first rotation element 112, to be parallel to the pivot control element 123 and face to the second vehicle for holding the second vehicle 30. Then, the locking element 115 may be locked again, and thus, the first rotation element 112 may fix the carrier element 113 to be parallel to the pivot control element 123 for stably holding the second vehicle 30.

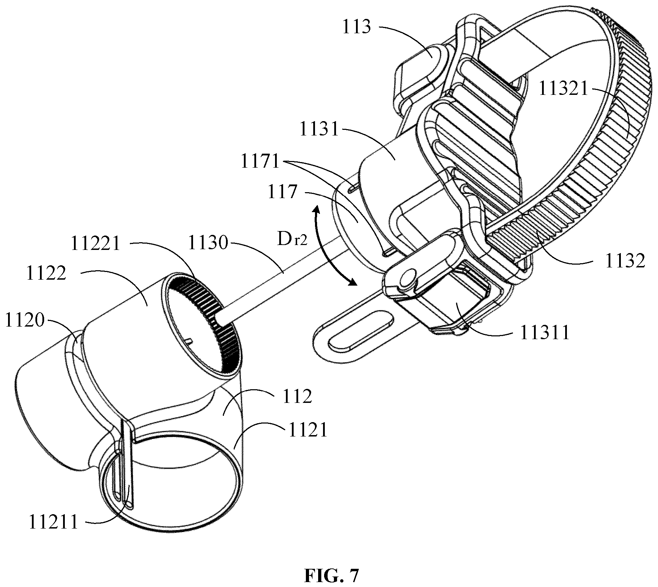

FIG. 7 is an exploded view of the first rotation element 112 and the carrier element 113, illustrated in FIG. 3, and a second rotation element 117, in accordance with one or more example implementations of this disclosure. The second rotation element 117 may be coupled to the carrier element 113 and the first rotation element 112. In some implementations, the second rotation element 117 and the carrier element 113 may be two different elements coupled to each other. In some other implementations, the second rotation element 117 and the carrier element 113 may be fabricated as a single entity.

In some implementations, one of the clamp portion 1122 and the second rotation element 117 may include a rotation fixing portion (not shown). The other one of the clamp portion 1122 and the second rotation element 117 may include a rotation engagement portion (not shown). The structure of the rotation fixing portion and the rotation engagement portion may allow the carrier element 113 to switch between allowing or disallowing the rotation. For example, the structure of the rotation fixing portion and the rotation engagement portion may include a combination of multiple cavities and a hump unit to allow the carrier element 113 to switch between allowing or disallowing the rotation.

As shown in FIG. 7, the clamp portion 1122 of the first rotation element 112 may further include a first rotation engagement unit 11221 having the cavities on an internal surface of the clamp portion 1122. The second rotation element 117 may further include a first rotation fixing portion 1171 corresponding to one of the cavities in the first rotation engagement unit 11221 of the first rotation element 112. For example, the first rotation fixing portion 1171 may include at least one hump unit, each corresponding to one of the cavities in the first rotation engagement unit 11221 of the first rotation element 112.

With reference to FIGS. 4, 5 and 7, when the locking element 115 is unlocked, the first rotation fixing portion 1171 may be allowed to separate from the first rotation engagement unit 11221. Thus, the second rotation element 117 may be rotatable to rotate the carrier element 113 along a second rotation axis, perpendicular to the first rotation axis, in a second rotation direction *D*_{*r*2}*.* When the locking element 115 is locked, the first rotation fixing portion 1171 may engage with one of the cavities in the first rotation engagement unit 11221 to fix the carrier element 113 and to prevent the carrier element 113 from further rotating along the second rotation axis. In some implementations, the connection portion 1130 may be the second rotation axis of the second rotation element 117.

In some other implementations, the second rotation element 117 may further include the first rotation engagement unit (not shown) having the cavities on an external surface of the second rotation element 117. In addition, the clamp portion 1122 of the first rotation element 112 may further include the first rotation fixing portion (not shown) corresponding to one of the cavities in the second rotation element 117. For example, the first rotation fixing unit of the clamp portion 1122 may include at least one hump unit, each corresponding to one of the cavities in the first rotation engagement unit of the second rotation element 117.

In yet some other implementations, the carrier device 10 may further include a second external fixing element (not shown) removably installed between the second rotation element 117 and the clamp portion 1122 to allow the carrier element 113 to switch between allowing or disallowing the rotation. In some implementations, the second external fixing element may be separated from the locking element 115 and independently installed between the second rotation element 117 and the clamp portion 1122. Thus, for example, when the second external fixing element is removed from the second rotation element 117 and the clamp portion 1122, the carrier element 113 may be rotatable along the second rotation axis, perpendicular to the first rotation axis, in the second rotation direction *D*_{*r*2}*.* In addition, when the second external fixing element may be installed on the carrier device 10, the carrier element 113 may be disabled to rotate along the second rotation axis. In some other implementations, the second external fixing element may be integrated with the locking element 115 into one piece. Thus, for example, when the locking element 115 is in the unlocked state, the second external fixing element may be removed from the second rotation element 117 and the clamp portion 1122 to enable the carrier element 113 to be rotatable along the second rotation axis, perpendicular to the first rotation axis, in the second rotation direction *D*_{*r*2}*.* In addition, when the locking element 115 is in the locked state, the second external fixing element may be installed on the carrier device 10 for preventing the carrier element 113 from rotating along the second rotation axis.

The carrier element 113 may further include a base portion 1131 and a holder portion 1132. The holder portion 1132 may be coupled to the base portion 1131. The holder portion 1132 may further include a holder engagement unit 11321 including multiple protrusions. The base portion 1131 may further include a holder fixing unit 11311 for engaging with the holder engagement unit 11321. In some implementations, the holder portion 1132 may be a movable strip portion including the protrusions, and the holder fixing unit 11311 may be a strip fixing unit to engage with one of the protrusions in the holder portion 1132 to fix the holder portion 1132.

With reference to FIGS. 2A, 2B, and 7, after the second vehicle is loaded onto the reception elements 122, the carrier element 113 may be rotated along the first rotation axis to be parallel to the pivot control element 123. Then, the holder fixing unit 11311 may be adjusted in an unfixed state, so that the holder portion 1132 may be movable in the holder fixing unit 11311. In order to stably hold the second vehicle 30, the holder portion 1132 may pass around a tubular portion of the second vehicle to tighten or loosen the tubular portion of the second vehicle for holding the second vehicle 30. Thus, the holder portion 1132 may be movable to tighten or loosen the tubular portion of the second vehicle 30. When the tubular portion of the second vehicle is tied tightly by the holder portion 1132, the holder fixing unit 11311 may be adjusted to be in a fixed state to fix the holder portion 1132. Thus, the holder fixing unit 11311 may engage with one of the protrusions in the holder engagement unit 11321 of the holder portion 1132 to prevent the holder portion 1132 from moving and loosening. In some implementations, the tubular portion in the vehicle frame 32 of the second vehicle 30 may be one of the top tube, the seat tube, and a down tube of the second vehicle 30.

In addition, in order to stably hold the second vehicle 30, the holder portion 1132 may be perpendicular to the tied tubular portion of the second vehicle 30. Since two sides of the holder portion 1132 are both coupled to the base portion 1131, the orientation of the holder portion 1132 may be controlled by an orientation of the base portion 1131 of the carrier element 113. Thus, in order to stably hold the second vehicle 30, the base portion 1131 may be rotated along the second rotation axis by the second rotation element 117 for adjusting the orientation of the carrier element 113 to correspond to a tubular direction of the tied tubular portion. In other words, the orientation of the carrier element 113 may also be adjusted to be perpendicular to the tubular direction of the tied tubular portion for tightly tying the tubular portion. The number of the cavities of the first rotation engagement unit 11221 may be equal to an integer. The greater the number of the cavities in the first rotation engagement unit 11221, the more orientations the carrier element 113 may be allowed to rotate.

When the locking element 115 is in the unlocked state, the second rotation element 117 may be allowed to rotate the carrier element 113 for adjusting the orientation of the carrier element 113. In addition, when the locking element 115 is in the locked state, the first rotation fixing portion 1171 of the second rotation element 117 may engage with the first rotation engagement unit 11221 to fix the carrier element 113. In other words, when the locking element 115 is in the locked state, the second rotation element 117 may not adjust the orientation of the carrier element 113. Therefore, the locking element 115 may be a third locking element used to control whether the second rotation element 117 is allowed to adjust the orientation of the carrier element 113 or not. Since the locking element 115 is capable of simultaneously performing the functions of the first locking element and the third locking element, the locking element 115 may simultaneously be regarded as both the first locking element and the third locking element. In other words, as shown in FIG. 5, the third locking element may be identical to the first locking element. In some implementations, the first locking element may be integrally formed with or separately formed from third the locking element. It should be noted that the locked scheme between the locking element 115 and the second rotation element 117 may be changed without departing from the scope of the present disclosure. In some implementations, since the locking element 115 is capable of simultaneously performing the functions of the first locking element, the second locking element, and the third locking element, the locking element 115 may simultaneously be regarded as each of the first locking element, the second locking element, and the third locking element. Additionally, the first locking element, the second locking element, and the third locking element may be integrally formed with or separately formed from each other.

In some implementations, one of the ring portion 1121 and the height adjustment element 114 may include a rotation fixing portion (not shown). The other one of the ring portion 1121 and the height adjustment element 114 may include a rotation engagement portion (not shown). The structure of the rotation fixing portion and the rotation engagement portion may allow the first rotation element 112 to switch between allowing or disallowing the rotation. For example, the structure of the rotation fixing portion and the rotation engagement portion may include a combination of multiple recess units and a hump unit to allow the first rotation element 112 to switch between allowing or disallowing the rotation.

With reference to FIGS. 6-7, the ring portion 1121 of the first rotation element 112 may further include a second rotation fixing unit 11211 protruded from an internal surface of the ring portion 1121. In addition, the height adjustment element 114 may further include multiple second rotation engagement portions 11400 to correspond to the second rotation fixing unit 11211. For example, the second rotation fixing unit 11211 may include at least one hump unit, and the second rotation engagement portions 11400 may include multiple recess units. When the locking element 115 is in the unlocked state, the slit portion 1120 may be enlarged and the ring portion 1121 may be loosened. Thus, the second rotation fixing unit 11211 may be moveable between the second rotation engagement portions 11400, and the first rotation element 112 may be rotatable with respect to the height adjustment element 114. However, when the locking element 115 is in the locked state, the slit portion 1120 may be narrowed and the ring portion 1121 may be tied. Thus, the second rotation fixing unit 11211 may be wrapped into the second rotation engagement portions 11400 such that the first rotation element 112 may not be allowed to rotate with respect to the height adjustment element 114. Therefore, the locking element 115 may control relative movement of the second rotation fixing unit 11211 and the second rotation engagement portions 11400 to determine whether the first rotation element 112 is allowed to rotate along the first rotation axis.

In some other implementations, the height adjustment element 114 may further include the second rotation fixing unit (not shown) protruded from an external surface of the height adjustment element 114. In addition, the ring portion 1121 of the first rotation element 112 may further include the second rotation engagement portions (not shown) to correspond to the second rotation fixing unit of the height adjustment element 114. For example, the second rotation fixing unit of the height adjustment element 114 may include at least one hump unit, and the second rotation engagement portions of the ring portion 1121 may include multiple recess units.

In yet some other implementations, the carrier device 10 may further include a third external fixing element (not shown) removably installed between the ring portion 1121 and the height adjustment element 114 to allow the first rotation element 112 to switch between allowing or disallowing the rotation. In some implementations, the third external fixing element may be separated from the locking element 115 and independently installed between the ring portion 1121 and the height adjustment element 114. Thus, for example, when the third external fixing element is removed from the ring portion 1121 and the height adjustment element 114, the first rotation element 112 may be rotatable with respect to the height adjustment element 114. In addition, when the third external fixing element may be installed on the carrier device 10, the first rotation element 112 may be disabled to rotate with respect to the height adjustment element 114. In some other implementations, the third external fixing element may be integrated with the locking element 115 into one piece. Thus, for example, when the locking element 115 is in the unlocked state, the third external fixing element may be removed from the ring portion 1121 and the height adjustment element 114 to enable the first rotation element 112 to be rotatable with respect to the height adjustment element 114. In addition, when the locking element 115 is in the locked state, the third external fixing element may be installed on the carrier device 10 for preventing the first rotation element 112 from rotating with respect to the height adjustment element 114.

When the first vehicle 20, holding the second vehicle 30, makes an emergency brake, objects on the first vehicle 20, such as the carrier device 10 and the second vehicle 30, may often tend to tilt forward due to inertia. In addition, when the first vehicle 20, holding the second vehicle 30, accelerates rapidly, the objects on the first vehicle 20 may often tend to shift backward due to inertia.

Since the supporting member 12 of the carrier device 10 may be directly mounted on the first vehicle 10, the shift of the supporting member 12 relative to the first vehicle 20, caused by inertia, may be low enough to be negligible. In addition, multiple wheels 31 of the second vehicle 30 may be trapped into the supporting member 12, which has a lower shift relative to the first vehicle 20, caused by inertia. The shift of the wheels 31 relative to the first vehicle 20, caused by inertia, may be also low enough to be negligible. Thus, when the second vehicle 30 shifts due to inertia, the wheels 31 of the second vehicle 30 may become a fulcrum of a swing of the second vehicle 30.

Furthermore, a first one of two terminals of the arm member 11 may be installed on the supporting member 12, which has the lower shift relative to the first vehicle 20, caused by inertia, by engaging the pivot rotation element 116 with the pivot control element 123. The shift of the first terminal of the arm member 11 relative to the first vehicle 20, caused by inertia, may be also low enough to be negligible. Thus, when the arm member 11 shifts due to inertia, the pivot rotation element 116 of the arm member 11 may become a fulcrum of a swing of the arm member 11.

The longer the distance between a connection line of the wheels 31 and a specific tubular portion in the vehicle frame 32 of the second vehicle 30, the greater the shift of the specific tubular portion in the vehicle frame 32 of the second vehicle 30. Thus, although the shift of the wheels 31 of the second vehicle 30 is small enough to be negligible, the shift of the specific tubular portion in the vehicle frame 32 of the second vehicle 30 relative to the supporting member 12 of the carrier device 10, caused by inertia, may be significant enough not to be negligible. In addition, the longer the distance between the pivot rotation element 116 and a specific one of the other elements in the arm member 11, the greater the shift of the specific element in the arm member 11. Thus, although the shift of the supporting member 12 is small enough to be negligible, the shift of the specific terminal of the arm member 11 relative to the supporting member 12 of the carrier device 10, caused by inertia, may be significant enough not to be negligible.

The weight of the second vehicle 30 may be different from that of the arm member 11, and the height of the center of gravity of the second vehicle 30 may also be different from that of the arm member 11. Thus, although the carrier element 113 of the arm member 11 may tighten the tubular portion of the second vehicle 30, the shift of the carrier element 113 of the arm member 11 may be different from that of the tubular portion of the second vehicle 30. In other words, when the first vehicle 20, holding the second vehicle 30, makes an emergency brake or accelerates rapidly, the carrier element 113 of the arm member 11 may be rotated due to a shift difference between the carrier element 113 of the arm member 11 and the tubular portion of the second vehicle 30. Furthermore, since the carrier element 113 of the arm member 11 may be rotated due to the shift difference, the pivot rotation element 116 may be rotated due to the rotation of the carrier element 113 of the arm member 11. Thus, when the first vehicle 20, holding the second vehicle 30, makes an emergency brake or accelerates rapidly, the first rotation element 112 and the pivot rotation element 116 may be rotated due to the shift difference, caused by inertia. Even if the carrier device 10 does not include the first rotation element 112, for rotating the carrier element 113 along the first rotation axis, and the pivot rotation element 116, for rotating the arm member 11, the carrier element 113 and the arm member 11 may be slightly rotate due to inertia. However, repeated abnormal slight rotations may cause fatigue, which will eventually lead to damage over time. Thus, the carrier device 10 may be required to overcome the inertia issue.

With reference to FIGS. 6-7, the structure of the rotation fixing portion, such as the second rotation fixing unit 11211, and the rotation engagement portion, such as the second rotation engagement portions 11400, generated by the first rotation element 112 and the height adjustment element 114 may allow the first rotation element 112 to switch between allowing or disallowing the rotation. Thus, when the first rotation element 112 tends to be rotated due to the shift difference, caused by inertia, the structure of the rotation fixing portion and the rotation engagement portion of the first rotation element 112 and the height adjustment element 114 may fix the direction of the carrier element 113 to prevent the shift difference from causing the rotation of the first rotation element 112.

Furthermore, with reference to FIGS. 2A and 3, the structure of the rotation fixing portion and the rotation engagement portion generated by the pivot rotation element 116 and the pivot control element 123 may allow the arm member 11 to switch between allowing or disallowing the rotation. Thus, when the arm member 11 tends to be rotated due to the shift difference, caused by inertia, the structure of the rotation fixing portion and the rotation engagement portion of the pivot rotation element 116 and the pivot control element 123 may fix the orientation of the arm member 11 to prevent the shift difference from causing the rotation of the arm member 11.

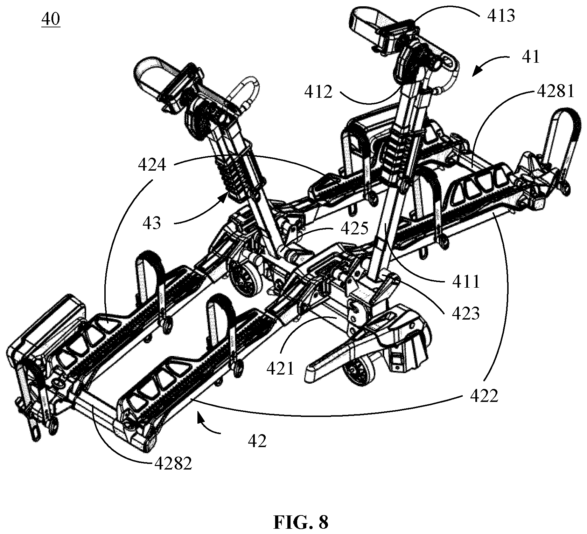

FIG. 8 is a perspective view of another carrier device 40, illustrated in FIG. 1, in accordance with one or more example implementations of this disclosure. The carrier device 40 may include an arm member 41 and a supporting member 42. The supporting member 42 may further include a row element 421, multiple reception elements 422 for supporting the second vehicle, and a pivot control element 423 coupled to the arm member 41. The arm member 41 may be coupled to the supporting member 42 and located between the reception elements 422. The reception elements 422 may be inclinedly coupled to the row element 421. Multiple inclined angles of the reception elements 422 with respect to the row element 421 may be equal to or different from each other. An included angle between extended lines of the reception elements 422 may be an obtuse angle. The pivot control element 423 may be parallel to the row element 421. In addition, with reference to FIGS. 1 and 8, the pivot control element 423 may be parallel to the vehicle orientation Ov of the first vehicle 20.

The arm member 41 may further include a column element 411, a first rotation element 412, and a carrier element 413. The carrier element 413 may be used to hold the second vehicle. The first rotation element 412, coupled to the carrier element 413, may be used to rotate the carrier element 413 along a first rotation axis. In addition, the column element 411, coupled to the first rotation element 412 and the pivot control element 423, may support the first rotation element 412 and the carrier element 413. In some implementations, the first rotation axis may be perpendicular to the column element 411 and the pivot control element 423. Since the pivot control element 423 may be parallel to the vehicle orientation Ov of the first vehicle 20, the first rotation axis, perpendicular to the pivot control element 423, may also be perpendicular to the vehicle orientation Ov of the first vehicle 20.

The column element 411 may be pivotably rotatable about the pivot control element 423 of the supporting member 42, allowing the arm member 41 to rotate between a loading position and an unloading position. The unloading position may be a position where the arm member 41 is substantially or almost parallel to one of the reception elements 422. The arm member 41 may be rotated to the loading position for holding the second vehicle on the supporting member 42. In some implementations, the loading position may be a position where the arm member 41 is substantially or almost perpendicular to one of the row element 421 and the reception elements 422. In some other implementations, the loading position may be a position where the arm member 41 may stably hold the second vehicle on the supporting member 42. However, the arm member 41 may be an obstacle to moving the second vehicle, when the second vehicle is being loaded to the carrier device 40.

With reference to FIGS. 2B and 8, one terminal of the ramp member 101 may be removably mounted to one of the reception elements 422, and the other terminal of the ramp member 101 may be placed on the surface 100. In other words, one of the reception elements 422 may be adapted to be coupled to the ramp member 101 for loading the second vehicle 30 along the ramp member 101 from the surface 100 onto the supporting member 42. When the second vehicle 30 is being loaded to the carrier device 40, the ramp member 101 may be mounted to one of the reception elements 422. Thus, the second vehicle 30 may climb the ramp member 101 for loading onto the carrier device 40. Then, the ramp member 101 may be disassembled from the carrier device 40 when the second vehicle 30 is loaded onto the carrier device 40. In some implementations, the surface 100 may be a ground.

The carrier element 413 may be rotated along the first rotation axis by the first rotation element 412 to a release position for preventing the second vehicle 30 from contacting the arm member 41 that is located at the loading position, when the second vehicle 30 is being loaded along the reception elements 422 onto the supporting member 42. Before the second vehicle 30 is loaded, the carrier element 413 may be rotated along the first rotation axis to the release position in advance. Thus, the carrier element 413 may not traverse a loading path of the second vehicle 30, preventing it from being the obstacle during the loading of the second vehicle 30. In some implementations, the release position may be a position where the carrier element 413, substantially or almost perpendicular to the reception elements 422, may be directed downwards. After the second vehicle 30 is moved on the reception elements 422 along the ramp member 101, the carrier element 413 may be rotated along the first rotation axis back to an operation position for holding the second vehicle 30. In some implementations, the operation position may be a position where the carrier element 413 is allowed to hold the second vehicle 30.

Referring back to FIG. 8, the supporting member 42 may further include multiple receiving elements 424 for supporting a third vehicle, and a shaft control element 425. In addition, the carrier device 40 may further include a branch member 43 coupled to the supporting member 42 between the receiving elements 424. The branch member 43 may be pivotably rotatable about the shaft control element 425 of the supporting member 42, allowing the branch member 43 to rotate between a loading position and an unloading position.

The receiving elements 424 may be different from, similar to, or identical to the reception elements 422. The branch member 43 may be different from, similar to, or identical to the arm member 41. Thus, the determination scheme of the loading position and the unloading position of the branch member 43 may be identical or similar to that of the arm member 41. In addition, the shaft control element 425 may be different from, similar to, or identical to the pivot control element 423. The third vehicle may be different from, similar to, or identical to the second vehicle 30.

The reception elements 422 and the arm member 41 may be set as a first vehicle holder of the carrier device 40, and the receiving elements 424 and the branch member 43 may be set as a second vehicle holder of the carrier device 40. The number of the vehicle holders may be greater than or equal to one. For example, the number of the vehicle holders may be equal to three or four.

The supporting member 42 may further include a first connection element 4281 and a second connection element 4282. The first connection element 4281 may be located at a left side of the carrier device 40, and the second connection element 4282 may be located at a right side of the carrier device 40. A first one of the reception elements 422 may be coupled to a first one of the receiving elements 424 by the first connection element 4281, and a second one of the reception elements 422 may be coupled to a second one of the receiving elements 424 by the second connection element 4282.

In some implementations, the supporting member 42 may further include a first accommodating element (not shown) to directly or indirectly couple to a first one of the reception elements 422. In addition, the supporting member 42 may further include a second accommodating element (not shown) to directly or indirectly couple to a second one of the receiving elements 424. Thus, the first accommodating element and the second accommodating element may be installed on different connection elements. The installations and the functions of the first accommodating element and the second first accommodating element in the carrier device 40 may be identical to or similar to those of the first accommodating element 1261 and the second first accommodating element 1262 in the carrier device 10.

In some other implementations, the supporting member 42 may further include multiple turning elements (not shown) directly or indirectly coupled to one of the first one of the reception elements 422 and the first one of the receiving elements 424, respectively. The installations and the functions of the turning elements in the carrier device 40 may be identical to or similar to those of the turning elements 127 in the carrier device 10.

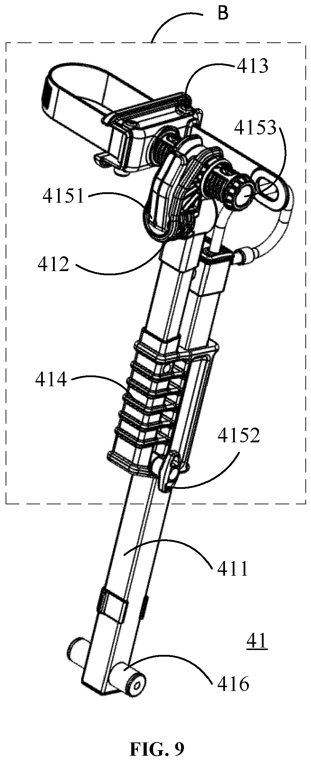

In order to clearly illustrate the implementations of this disclosure in detail, the arm member 41 may be illustrated as examples. FIG. 9 is a perspective view of the arm member 41, illustrated in FIG.8, in accordance with one or more example implementations of this disclosure. Besides the column element 411, the first rotation element 412, and the carrier element 413, the arm member 41 may further include a height adjustment element 414, a first locking element 4151, a second locking element 4152, a third locking element 4153, and a pivot rotation element 416. In some implementations, as shown in FIG. 9, the second locking element 4152 may be different from the first locking element 4151, and the third locking element 4153 may also be different from the first locking element 4151. Additionally, the second locking element 4152 may be separately formed from the first locking element 4151, the third locking element 4153 may also be separately formed from the first locking element 4151, and the third locking element 4153 may also be separately formed from the second locking element 4152.

The height adjustment element 414 may be used to adjust an element height of the carrier element 413 to correspond to a vehicle height of the second vehicle 30. When the vehicle height of the second vehicle is high, the location of the center of gravity of the second vehicle 30 may also be high. Thus, the element height of the carrier element 413 may need to be high enough to ensure that the carrier element 413 stably holds the second vehicle 30. The higher the element height of the carrier element 413, the longer an element distance between the carrier element 413 and the row element 421. The element distance may need to be greater than a distance threshold for stably holding the second vehicle 30. The distance threshold may be determined based on the vehicle height of the second vehicle 30. In some implementations, the vehicle height of the second vehicle 30 may be determined based on a highest point of a top tube, a lowest point of the top tube, or a highest point of a seat tube of a vehicle frame 32 of the second vehicle 30.

The first locking element 4151 may be coupled to the first rotation element 412. When the first locking element 4151 is locked, the rotation of the first rotation element 412 and the carrier element 413 may be restricted. In addition, when the first locking element 4151 is unlocked, the first rotation element 412 and the carrier element 413 may be allowed to rotate. The second locking element 4152 may be coupled to the height adjustment element 414. When the second locking element 4152 is locked, the movement of the height adjustment element 414 may be restricted. In addition, when the second locking element 4152 is unlocked, the height adjustment element 414 may be allowed to move.

With reference to FIGS. 2B, 8, and 9, the pivot rotation element 416 may be coupled to the pivot control element 423 of the supporting member 42 to rotate the arm member 41 between the loading position and the unloading position. In some implementations, the pivot control element 423 of the supporting member 42 may allow the pivot rotation element 416 to be rotatable, enabling the arm member 41 to rotate to the loading position along the pivot control element 423 before the second vehicle 30 is loaded onto the carrier device 40. In some implementations, the rotation of the pivot rotation element 416 may be restricted by the pivot control element 423 of the supporting member 42 when the second vehicle 30 is hold on the carrier device 40. The rotation of the pivot rotation element 416 may be restricted to prevent the second vehicle 30 from shifting along the vehicle orientation Ov of the first vehicle 20 when the first vehicle 20 is moving along the vehicle orientation Ov of the first vehicle 20.

In some implementations, one of the pivot rotation element 416 and the pivot control element 423 may include a rotation fixing portion (not shown). The other one of the pivot rotation element 416 and the pivot control element 423 may include a rotation engagement portion (not shown). The structure of the rotation fixing portion and the rotation engagement portion may allow the arm member 41 to switch between allowing or disallowing the rotation. For example, the structure of the rotation fixing portion and the rotation engagement portion may be a tight screw packing structure to allow the arm member 41 to switch between allowing or disallowing the rotation.

In yet some other implementations, the carrier device 40 may further include a first external fixing element (not shown) removably installed between the pivot rotation element 416 and the pivot control element 423 to allow the arm member 41 to switch between allowing or disallowing the rotation. For example, before the second vehicle 30 is loaded onto the carrier device 40, the first external fixing element may be removed from the carrier device 40 to enable the arm member 41 to rotate to the loading position along the pivot control element 423. In addition, when the second vehicle 30 is hold on the carrier device 40, the first external fixing element may be installed on the carrier device 40 for restricting the rotation of the pivot rotation element 416 to prevent the second vehicle 30 from shifting due to inertia.

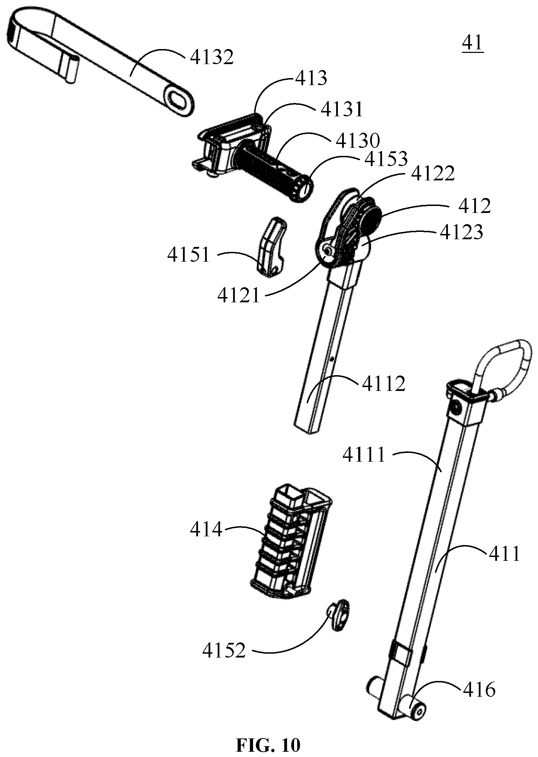

FIG. 10 is an exploded view of the arm member 41, illustrated in FIG. 8, in accordance with one or more example implementations of this disclosure. With reference to FIGS. 9-10, the column element 411 may further include a first column portion 4111 and a second column portion 4112. The first column portion 4111 and the second column portion 4112 may respectively inserted into the height adjustment element 414. The second locking element 4152 may be used to control the movement of the height adjustment element 414.

The first rotation element 412 may further include a joint portion 4121 and a round portion 4122, and a link portion 4123. The link portion 4123 may be used to couple the first rotation element 412 to the column element 411. The joint portion 4121 may be coupled to the link portion 4123 and rotatable along the first rotation axis with respect to the link portion 4123. The round portion 4122 may be coupled to the joint portion 4121 for the carrier element 413 to rotate along a second rotation axis, different from the first rotation axis.

The carrier element 413 may further include a connection portion 4130, a base portion 4131, and a holder portion 4132. The connection portion 4130 may penetrate through the round portion 4122 of the first rotation element 412. The connection portion 4130 may rotate within the round portion 4122 to control a distance between the carrier element 413 and the second vehicle 30. In some implementations, the connection portion 4130 may further include multiple threads. The holder portion 4132 may be coupled to the base portion 4131. The holder portion 4132 may be a movable strip portion including multiple protrusions, and the base portion 4131 may further include a strip fixing unit to engage with one of the protrusions in the holder portion 4132 for stably holding the second vehicle 30.

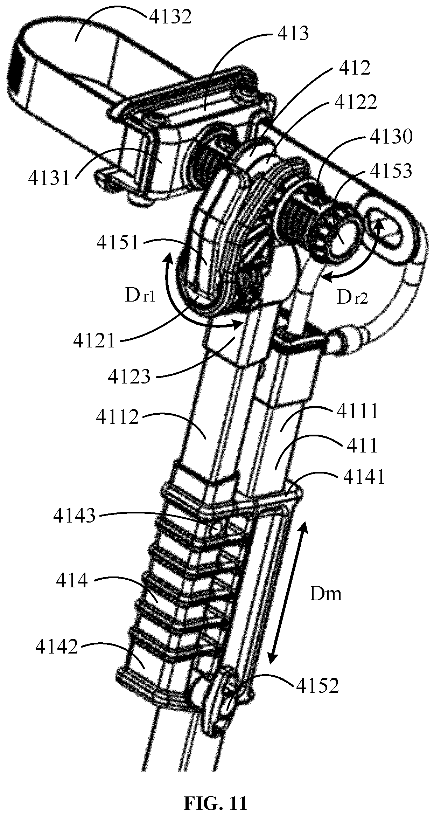

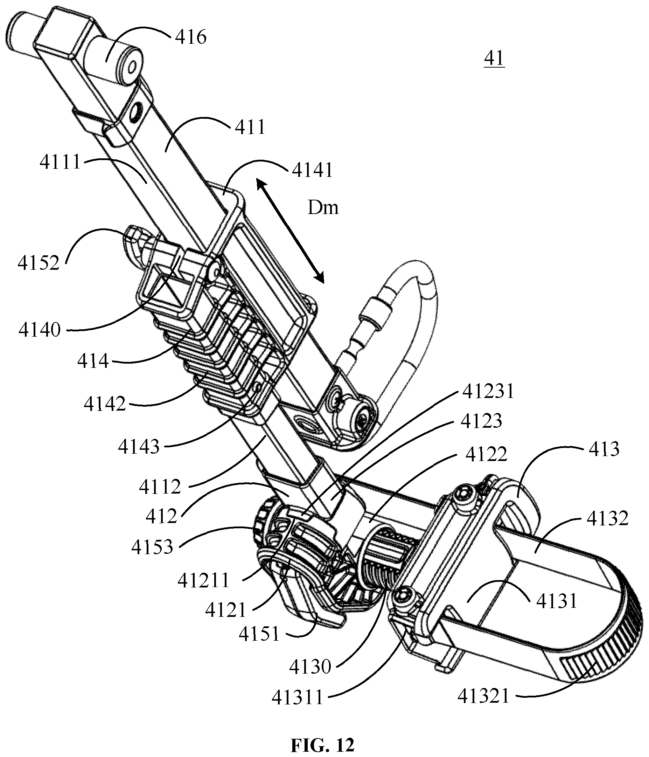

FIG. 11 is a partially enlarged view of a region B, illustrated in FIG. 9, in accordance with one or more example implementations of this disclosure. FIG. 12 is another perspective view of the arm member 41, illustrated in FIG. 8, in accordance with one or more example implementations of this disclosure. With reference to FIGS. 10-12 The height adjustment element 414 may further include a first adjustment portion 4141, a second adjustment portion 4142, and a gap portion 4140. The first column portion 4111 of the column element 411 may be inserted into the first adjustment portion 4141, and the second column portion 4112 of the column element 411 may be inserted into the second adjustment portion 4142. The gap portion 4140 may be generated on a wall between the first adjustment portion 4141 and second adjustment portion 4142. In some implementations, the height adjustment element 414 may further include a pin portion 4143 penetrating through the second adjustment portion 4142 and the second column portion 4112 to prevent relative movement between the second adjustment portion 4142 and the second column portion 4112. In some other implementations, the pin portion 4143 may be excluded from the height adjustment portion 4142. Thus, the second column portion 4112 may be movable with respect to the height adjustment portion 4142.

The second locking element 4152 may penetrate through the wall between the first adjustment portion 4141 and second adjustment portion 4142 to control a gap width of the gap portion 4140. The second locking element 4152 may control the gap width to determine whether the height adjustment element 414 is allowed to move the first rotation element 412 and the carrier element 413 to adjust the element height of the carrier element 413 or not. When the second locking element 4152 is locked in a locked state to narrow the gap width of the gap portion 4140, the first column portion 4111 may be clamped tightly by the first adjustment portion 4141. Thus, the first adjustment portion 4141 may not be allowed to move along a moving direction Dm. In addition, the second column portion 4112 may also be clamped tightly by the second adjustment portion 4142. Thus, the second column portion 4112 may not be allowed to move along the moving direction Dm.

When the second locking element 4152 is unlocked in an unlocked state to enlarge the gap width of the gap portion 4140, the first column portion 4111 may be loosened. Thus, the first adjustment portion 4141 may be allowed to move along the first column portion 4111 in the moving direction Dm. In other words, the second column 4112, the first rotation element 412 and the carrier element 413 may move along the moving direction Dm to adjust the element height of the carrier element 413. In some implementations, when the height adjustment element 414 includes pin portion 4143, the second column portion 4112 may not be allowed to move along the moving direction Dm in the unlocked state. However, in some other implementations, when the pin portion 4143 is excluded from the height adjustment portion 4142, the second column portion 4112 may be allowed to move along the moving direction Dm in the unlocked state. Therefore, the second locking element 4152 may be used to control whether the height adjustment element 414 is allowed to move the first rotation element 412 and the carrier element 413 to adjust the element height of the carrier element 413 or not. It should be noted that the locked scheme between the second locking element 4152 and the height adjustment element 414 may be changed without departing from the scope of the present disclosure.

The link portion 4123 may be used to couple the first rotation element 412 to the second column element 4112. The joint portion 4121 may be coupled to the link portion 4123 and rotatable along the first rotation axis with respect to the link portion 4123 in a first rotation direction *D*_{*r*1}*.* The joint portion 4121 and the link portion 4123 may have a co-axial axis. The co-axial axis may be the first rotation axis of the joint portion 4121. The round portion 4122 may be coupled to the joint portion 4121 and the carrier element 4123 for rotating the carrier element 4123 in the first rotation direction *D*_{*r*1}*.* The first locking element 4151 may be used to lock the joint portion 4121 and the link portion 4123 together to prevent relative rotation between the joint portion 4121 and the link portion 4123. In some implementations, the joint portion 4121 may include multiple first sawtooth units, and the link portion 4123 may also include multiple second sawtooth units, each corresponding to one of the first sawtooth units. Thus, the first sawtooth units and the second sawtooth units may be used to control a rotation angle of the joint portion 4121. It should be noted that the engagement scheme between the joint portion 4121 and the link portion 4123 may be changed without departing from the scope of the present disclosure.

In some implementations, one of the joint portion 4121 and the link portion 4123 may include a rotation fixing portion (not shown). The other one of the joint portion 4121 and the link portion 4123 may include a rotation engagement portion (not shown). The structure of the rotation fixing portion and the rotation engagement portion may allow the joint portion 4121 to switch between allowing or disallowing the rotation. For example, the structure of the rotation fixing portion and the rotation engagement portion may include a combination of multiple recess units and multiple hump units to allow the joint portion 4121 to switch between allowing or disallowing the rotation.

As shown in FIG. 12, the joint portion 4121 may further include a second rotation fixing unit 41211 facing toward the link portion 4123. In addition, the link portion 4123 may further include a second rotation engagement unit 41231 to correspond to the rotation fixing unit 41211. For example, the second rotation fixing unit 41211 may include multiple hump units, and the second rotation engagement portions 41231 may include multiple recess units. When the first locking element 4151 is locked in a locked state to lock the joint portion 4121 and the link portion 4123 together, the joint portion 4121 may not be allowed to rotate along the first rotation axis with respect to the link portion 4123 in the first rotation direction *D*_{*r*1}*.* When the first locking element 4151 is unlocked in an unlocked state, the joint portion 4121 may be allowed to separate from the link portion 4123. Thus, the joint portion 4121 may be allowed to rotate along the first rotation axis with respect to the link portion 4123 in the first rotation direction *D*_{*r*1}*.* Therefore, the first locking element 4151 may be used to control whether the first rotation element 412 is allowed to rotate the carrier element 413 along the first rotation axis in the first rotation direction *D*_{*r*1} or not. It should be noted that the locked scheme between the first locking element 4151 and the joint portion 4121 may be changed without departing from the scope of the present disclosure.

In some other implementations, the link portion 4123 may further include the second rotation fixing unit (not shown) facing toward the joint portion 4121. In addition, the joint portion 4121 may further include the second rotation engagement portions (not shown) to correspond to the second rotation fixing unit. For example, the second rotation fixing unit may include the hump units, and the second rotation engagement portions may include the recess units.

In yet some other implementations, the carrier device 40 may further include the third external fixing element (not shown) removably installed between the link portion 4123 and the joint portion 4121 to allow the joint portion 4121 to switch between allowing or disallowing the rotation. In some implementations, the third external fixing element may be separated from the first locking element 4151 and independently installed between the link portion 4123 and the joint portion 4121. Thus, for example, when the third external fixing element is removed from the link portion 4123 and the joint portion 4121, the joint portion 4121 may be rotatable with respect to the link portion 4123. In addition, when the third external fixing element may be installed on the carrier device 40, the joint portion 4121 may be disabled to rotate with respect to the link portion 4123. In some other implementations, the third external fixing element may be integrated with the first locking element 4151 into one piece. Thus, for example, when the first locking element 4151 is in the unlocked state, the third external fixing element may be removed from the link portion 4123 and the joint portion 4121 to enable the joint portion 4121 to be rotatable with respect to the link portion 4123. In addition, when the first locking element 4151 is in the locked state, the third external fixing element may be installed on the carrier device 40 for preventing the joint portion 4121 from rotating with respect to the link portion 4123.

The carrier element 413 may further include the connection portion 4130, the base portion 4131, and the holder portion 4132. The connection portion 4130 may penetrate through the round portion 4122 of the first rotation element 412. The connection portion 4130 may rotate within the round portion 4122 to control the distance between the carrier element 413 and the second vehicle 30. In some implementations, the connection portion 4130 may further include multiple threads, and the threads of the connection portion 4130 may be multiple external threads. In addition, the round portion 4122 may also include multiple threads, and the threads of the round portion 4122 may be multiple internal threads, corresponding to the external threads of the connection portion 4130. The connection portion 4130 and the round portion 4122 may have a co-axial axis. Thus, the connection portion 4130 of the carrier element 413 may rotate within the round portion 4122. The connection portion 4130 of the carrier element 413 may be allowed to rotate along a second rotation axis, perpendicular to the first rotation axis, in a second rotation direction *D*_{*r*2}*.* The co-axial axis may be the second rotation axis of the connection portion 4130. It should be noted that the engagement scheme between the connection portion 4130 and the round portion 4122 may be changed without departing from the scope of the present disclosure.

When the third locking element 4153 is locked in a locked state, the connection portion 4130 of the carrier element 413 may not be allowed to rotate along the second rotation axis with respect to the round portion 4122 in the second rotation direction *D*_{*r*2}*.* When the first locking element 4151 is unlocked in an unlocked state, the connection portion 4130 of the carrier element 413 may be allowed to rotate along the second rotation axis with respect to the round portion 4122 in the second rotation direction *D*_{*r*2}*.* Therefore, the third locking element 4153 may be used to control whether the connection portion 4130 is allowed to adjust the orientation of the carrier element 413 and the distance between the carrier element 413 and the second vehicle or not. It should be noted that the locked scheme between the third locking element 4153 and the connection portion 4130 may be changed without departing from the scope of the present disclosure.

The holder portion 4132 may further include a holder engagement unit 41321 including multiple protrusions. The base portion 4131 may further include a holder fixing unit 41311 for engaging with the holder engagement unit 41321. In some implementations, the holder portion 4132 may be a movable strip portion including the protrusions, and the holder fixing unit 41311 may be a strip fixing unit to engage with one of the protrusions in the holder portion 4132 to fix the holder portion 4132.

With reference to FIGS. 2A, 2B, and 12, after the second vehicle is loaded onto the reception elements 422, the carrier element 413 may be rotated along the first rotation axis to be parallel to the pivot control element 423. Then, the holder fixing unit 41311 may be adjusted in an unfixed state, so that the holder portion 4132 may be movable in the holder fixing unit 41311. In order to stably hold the second vehicle 30, the holder portion 4132 may pass around a tubular portion of the second vehicle to tighten or loosen the tubular portion of the second vehicle for holding the second vehicle 30. Thus, the holder portion 4132 may be movable to tighten or loosen the tubular portion of the second vehicle 30. When the tubular portion of the second vehicle is tied tightly by the holder portion 4132, the holder fixing unit 41311 may be adjusted to be in a fixed state to fix the holder portion 4132. Thus, the holder fixing unit 41311 may engage with one of the protrusions in the holder engagement unit 41321 of the holder portion 4132 to prevent the holder portion 4132 from moving and loosening. In some implementations, the tubular portion in the vehicle frame 32 of the second vehicle 30 may be one of the top tube, the seat tube, and a down tube of the second vehicle 30.

When the first vehicle 20, holding the second vehicle 30, makes an emergency brake, objects on the first vehicle 20, such as the carrier device 40 and the second vehicle 30, may often tend to tilt forward due to inertia. In addition, when the first vehicle 20, holding the second vehicle 30, accelerates rapidly, the objects on the first vehicle 20 may often tend to shift backward due to inertia.

Since the supporting member 42 of the carrier device 40 may be directly mounted on the first vehicle 20, the shift of the supporting member 42 relative to the first vehicle 20, caused by inertia, may be low enough to be negligible. In addition, multiple wheels 31 of the second vehicle 30 may be trapped into the supporting member 42, which has a lower shift relative to the first vehicle 20, caused by inertia. The shift of the wheels 31 relative to the first vehicle 20, caused by inertia, may be also low enough to be negligible. Thus, when the second vehicle 30 shifts due to inertia, the wheels 31 of the second vehicle 30 may become a fulcrum of a swing of the second vehicle 30.

Furthermore, a first one of two terminals of the arm member 41 may be installed on the supporting member 42, which has the lower shift relative to the first vehicle 20, caused by inertia, by engaging the pivot rotation element 416 with the pivot control element 423. The shift of the first terminal of the arm member 41 relative to the first vehicle 20, caused by inertia, may be also low enough to be negligible. Thus, when the arm member 41 shifts due to inertia, the pivot rotation element 416 of the arm member 41 may become a fulcrum of a swing of the arm member 41.

The longer the distance between a connection line of the wheels 31 and a specific tubular portion in the vehicle frame 32 of the second vehicle 30, the greater the shift of the specific tubular portion in the vehicle frame 32 of the second vehicle 30. Thus, although the shift of the wheels 31 of the second vehicle 30 is small enough to be negligible, the shift of the specific tubular portion in the vehicle frame 32 of the second vehicle 30 relative to the supporting member 42 of the carrier device 40, caused by inertia, may be significant enough not to be negligible. In addition, the longer the distance between the pivot rotation element 416 and a specific one of the other elements in the arm member 41, the greater the shift of the specific element in the arm member 41. Thus, although the shift of the supporting member 42 is small enough to be negligible, the shift of the specific terminal of the arm member 41 relative to the supporting member 42 of the carrier device 40, caused by inertia, may be significant enough not to be negligible.

The weight of the second vehicle 30 may be different from that of the arm member 41, and the height of the center of gravity of the second vehicle 30 may also be different from that of the arm member 41. Thus, although the carrier element 413 of the arm member 41 may tighten the tubular portion of the second vehicle 30, the shift of the carrier element 413 of the arm member 41 may be different from that of the tubular portion of the second vehicle 30. In other words, when the first vehicle 20, holding the second vehicle 30, makes an emergency brake or accelerates rapidly, the carrier element 413 of the arm member 41 may be rotated due to a shift difference between the carrier element 413 of the arm member 41 and the tubular portion of the second vehicle 30. Furthermore, since the carrier element 413 of the arm member 41 may be rotated due to the shift difference, the pivot rotation element 416 may be rotated due to the rotation of the carrier element 413 of the arm member 41. Thus, when the first vehicle 20, holding the second vehicle 30, makes an emergency brake or accelerates rapidly, the first rotation element 412 and the pivot rotation element 416 may be rotated due to the shift difference, caused by inertia. Even if the carrier device 40 does not include the first rotation element 412, for rotating the carrier element 413 along the first rotation axis, and the pivot rotation element 416, for rotating the arm member 41, the carrier element 413 and the arm member 41 may be slightly rotate due to inertia. However, repeated abnormal slight rotations may cause fatigue, which will eventually lead to damage over time. Thus, the carrier device 40 may be required to overcome the inertia issue.

With reference to FIGS. 12, the structure of the rotation fixing portion, such as the second rotation fixing unit 41211, and the rotation engagement portion, such as the second rotation engagement unit 41231, generated by the joint portion 4121 and the link portion 4123 may allow the joint portion 4121 to switch between allowing or disallowing the rotation. Thus, when the carrier element 413 tends to be laterally rotated due to the shift difference, caused by inertia, the structure of the rotation fixing portion and the rotation engagement portion of the joint portion 4121 and the link portion 4123 may fix not only the longitudinal direction but also the lateral direction of the carrier element 413 to prevent the shift difference from causing the lateral rotation of the carrier element 413.

Furthermore, with reference to FIGS. 8 and 9, the structure of the rotation fixing portion and the rotation engagement portion generated by the pivot rotation element 416 and the pivot control element 423 may allow the arm member 41 to switch between allowing or disallowing the rotation. Thus, when the arm member 41 tends to be rotated due to the shift difference, caused by inertia, the structure of the rotation fixing portion and the rotation engagement portion of the pivot rotation element 416 and the pivot control element 423 may fix the orientation of the arm member 41 to prevent the shift difference from causing the rotation of the arm member 41.

The embodiments shown and described above are only examples. Many details are often found in the art. Therefore, many such details are neither shown nor described. Even though numerous characteristics and advantages of the present disclosure have been set forth in the foregoing description, together with details of the structure and function of the present disclosure, the present disclosure is illustrative only, and changes may be made in the details. It will therefore be appreciated that the embodiment described above may be modified within the scope of the claims.

## Claims

1. A carrier device (10, 40) mountable to a first vehicle (20) for holding a second vehicle (30) different from the first vehicle (20), the carrier device (10, 40) comprising:
a supporting member (12, 42) having a plurality of reception elements (122, 422) for supporting the second vehicle (30); and
an arm member (11, 41) coupled to the supporting member (12, 42) and located between the plurality of reception elements (122, 422), the arm member (11, 41) further comprising:
a carrier element (113, 413) configured to hold the second vehicle (30);
a first rotation element (112, 412) coupled to the carrier element (113, 413) and configured to rotate the carrier element (113, 413) along a first rotation axis;
a first locking element (115, 4151) configured to control whether the first rotation element (112, 412) is allowed to rotate the carrier element (113, 413) along the first rotation axis or not; and
a column element (111, 411) coupled to the first rotation element (112, 412) and a pivot control element (123, 423) of the supporting member (12, 42), the pivot control element (123, 423) being perpendicular to the first rotation axis, wherein the column element (111, 411) is pivotably rotatable about the pivot control element (123, 423) of the supporting member (12, 42), allowing the arm member (11, 41) to rotate between a loading position and an unloading position.

2. The carrier device (10, 40) of claim 1, wherein:
the arm member (11, 41) is rotated to the loading position for holding the second vehicle (30) on the supporting member (12, 42), and
the carrier element (113, 413) is rotated along the first rotation axis by the first rotation element (112, 412) to a release position, for preventing the second vehicle (30) from contacting the arm member (11, 41) that is located at the loading position, when the second vehicle (30) is being loaded along the plurality of reception elements (122, 422) onto the supporting member (12, 42).

3. The carrier device (10, 40) of any preceding claim, wherein the arm member (11, 41) further comprises:
a pivot rotation element (116, 416) coupled to the pivot control element (123, 423) of the supporting member (12, 42) to rotate the arm member (11, 41) between the loading position and the unloading position, wherein:
a rotation of the pivot rotation element (116, 416) is restricted by the pivot control element (123, 423) of the supporting member (12, 42) when the second vehicle (30) is hold on the carrier device (10, 40), and
the rotation of the pivot rotation element (116, 416) is restricted to prevent the second vehicle (30) from shifting along a vehicle orientation (Ov) when the first vehicle (20) is moving along the vehicle orientation (Ov).

4. The carrier device (10, 40) of any preceding claim, wherein the arm member (11, 41) further comprises:
a height adjustment element (114, 414) configured to adjust an element height of the carrier element (113, 413) to correspond to a vehicle height of the second vehicle (30).

5. The carrier device (10, 40) of claim 4, wherein the arm member (11, 41) further comprises:
a second locking element (115, 4152) configured to control whether the height adjustment element (114, 414) is allowed to adjust the element height of the carrier element (113, 413) or not, wherein the second locking element (115, 4152) is integrally formed with or separately formed from the first locking element (115, 4151).

6. The carrier device (10, 40) of any preceding claim, wherein the carrier element (113, 413) further comprises:
a base portion (1131, 4131); and
a holder portion (1132, 4132) coupled to the base portion (1131, 4131), wherein the holder portion (1132, 4132) is movable to tighten or loosen a tubular portion of the second vehicle (30).

7. The carrier device (10, 40) of claim 6, wherein the arm member (11, 41) further comprises:
a second rotation element (117, 4130) coupled to the carrier element (113, 413) and the first rotation element (112, 412), wherein the second rotation element (117, 4130) is rotatable to rotate the base portion (1131, 4131) along a second rotation axis perpendicular to the first rotation axis, for adjusting an orientation of the carrier element (113, 413) to correspond to a tubular direction of the tubular portion.

8. The carrier device (10, 40) of claim 6 or 7, wherein the arm member (11, 41) further comprises:
a third locking element (115, 4153) configured to control whether the second rotation element (117, 4130) is allowed to adjust the orientation of the carrier element (113, 413) or not, wherein the third locking element (115, 4153) is integrally formed with or separately formed from the first locking element (115, 4151).

9. The carrier device (10, 40) of any preceding claim, wherein:
the first rotation element (112, 412) is rotatable for allowing the carrier element (113, 413) to rotate along the first rotation axis to be perpendicular to the pivot control element (123, 423) when the first locking element (115, 4151) is in an unlocked state, and
the carrier element (113, 413) is rotated along the first rotation axis to be perpendicular to the pivot control element (123, 423) for preventing the second vehicle (30) from contacting the arm member (11, 41), when the second vehicle (30) is being loaded onto the supporting member (12, 42).

10. The carrier device (10, 40) of any preceding claim, wherein:
the first locking element (115,4151) restricts a rotation of the first rotation element (112, 412) when the first locking element (115, 4151) is in a locked state, and
the rotation of the first rotation element (112, 412) is restricted to prevent the second vehicle (30) from shifting along a vehicle orientation (Ov) when the first vehicle (20) is moving along the vehicle orientation (Ov).

11. The carrier device (10, 40) of any preceding claim, wherein the supporting member (12, 42) further comprises:
an accommodating element (1261, 1262) coupled to one of the reception elements (122, 422), wherein the accommodating element (1261, 1262) accommodates the arm member (11, 41) when the arm member (11, 41) is located in the unloading position.

12. The carrier device (10, 40) of any preceding claim, wherein the supporting member (12, 42) further comprises:
a turning element (127) coupled to one of the reception elements (122, 422), wherein the carrier device (10, 40) is movable through the turning element (127) when the turning element (127) is placed on a surface (100).

13. A vehicle-holding vehicle (1), comprising:
a first vehicle (20); and
a carrier device (10, 40) of any preceding claim, coupled to the first vehicle (20) for holding a second vehicle (30), different from the first vehicle (20).
